# EUROPEAN PATENT APPLICATION

(11) **EP 3 767 080 A2**
(43) Date of publication of application: **20.01.2021**
(21) Application number: 20184955.1
(22) Date of filing: 09.07.2020
(51) Int. Cl.: F01D 25/16, F02C 7/06, F02K 5/00

(54) **THERMALLY PROTECTED MOTOR/GENERATOR FOR GAS TURBINE ENGINE**

(30) Priority: 15.07.2019 US 201916511135
(71) Applicant: Raytheon Technologies Corporation, Farmington, CT 06032 (US)
(72) Inventor: MULDOON, Marc J., Marlborough, CT Connecticut 06447 (US)
(74) Representative: Dehns

(57) **Abstract**

A turbofan engine (20) includes a main engine shaft (40) rotatable about an engine axis (A). A bearing assembly (78, 80) supports rotation of the main engine shaft (40). A bearing compartment (64) defines an enclosed space around the bearing assembly (78, 80). An electric machine (72) is supported within the bearing compartment (64) and coupled to the main engine shaft (40). A turbofan engine (20) assembly and a method are also disclosed.

## Description

### BACKGROUND

A turbofan engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section.

Electric power for the engine is typically provided by a motor/generator driven through a tower shaft driven by a main engine shaft. Motor/generators and electric motors are typically stand-alone devices that are coupled to an external accessory gearbox. Alternate motor/generator and motor configurations and placements may provide increased engine efficiencies and accommodate increasing demands for electric power.

Turbine engine manufacturers continue to seek further improvements to engine performance including improvements to thermal, transfer and propulsive efficiencies.

### SUMMARY

According to a first aspect of the present invention, there is provided a turbofan engine comprising a main engine shaft rotatable about an engine axis. A bearing assembly supports rotation of the main engine shaft (low spool shaft). A bearing compartment defines an enclosed space around the bearing assembly. An electric machine is supported within the bearing compartment and coupled to the main engine shaft.

In an embodiment according to the above embodiment, the bearing compartment is disposed within a turbine exhaust case.

In an embodiment according to any of the above embodiments, the main engine shaft includes a shaft coupled to an aft most turbine section.

In an embodiment according to any of the above embodiments, the bearing assembly includes a forward bearing spaced axially apart from an aft bearing.

In an embodiment according to any of the above embodiments, a supply conduit is included that extends at least partially through the turbine exhaust case and includes a lubricant passage communicating lubricant to the bearing assembly and electric machine within the bearing compartment.

In an embodiment according to any of the above embodiments, an electric power cable is routed through the supply conduit and at least partially surrounded by the lubricant passage.

In an embodiment according to any of the above embodiments, the electric power cable is disposed along a centerline of the supply conduit and the lubricant passage is disposed at least partially around the electric power cable.

In an embodiment according to any of the above embodiments, the lubricant passage includes a least lubricant supply passage and a lubricant return passage.

In an embodiment according to any of the above embodiments, a transmission is coupled between the main engine shaft and the electric machine.

In an embodiment according to any of the above embodiments, the transmission drives an output shaft that is concentric with the main engine shaft and coupled to the electric machine.

In an embodiment according to any of the above embodiments, an intershaft bearing is disposed between the output shaft and the main engine shaft.

According to a second aspect of the present invention, there is provided a turbofan engine assembly comprising a fan rotatable about a main engine axis. A low spool shaft (main engine shaft) rotates about the main engine axis and couples a low pressure compressor to a low pressure turbine. A high spool shaft is concentric about the low spool shaft and is rotatable about the main engine axis. The high spool shaft couples a high pressure compressor to a high pressure turbine. A combustor is disposed axially between the high pressure compressor and the high pressure turbine. An aft bearing compartment is disposed within an engine case aft of the low pressure turbine. An aft bearing assembly is disposed within the aft bearing compartment. The aft bearing assembly supports an aft end of the low spool shaft. A motor/generator is disposed within the aft bearing compartment and coupled to the low spool shaft.

In an embodiment according to the above embodiment, a supply conduit is included that extends radially outward from the aft bearing compartment. The supply conduit includes a lubricant passage for communicating lubricant to the bearing assembly and the motor/generator within the bearing compartment.

In an embodiment according to any of the above embodiments, an electric power cable is routed through the supply conduit and the lubricant passage is disposed at least partially around the electric power cable.

In an embodiment according to any of the above embodiments, a transmission is disposed within the aft bearing compartment and is coupled between the low spool shaft and the motor/generator. The transmission drives an output shaft that is concentric with the low spool shaft and supported by an intershaft bearing disposed between the low spool shaft and the output shaft.

According to a third aspect of the present invention, there is provided a method of assembling a turbofan engine comprising assembling a first housing portion within a turbine exhaust case to define a forward portion of a bearing compartment, assembling a bearing assembly within the bearing assembly for supporting a main engine shaft, assembling an motor/generator into the first housing portion beginning aft of the turbine exhaust case and moving forward along an axis of the main engine shaft, and attaching a second housing portion to the first housing portion to define an aft portion of the bearing compartment and enclose the bearing assembly and motor/generator.

In an embodiment according to the above embodiment, a supply conduit is assembled to extend radially outward through the turbine exhaust case to provide a protected passage for an electric power cable coupled to the motor/generator.

In an embodiment according to any of the above embodiments, the supply conduit is assembled to include a lubricant passage surrounding the electric power cable.

In an embodiment according to any of the above embodiments, a transmission is assembled into the bearing compartment and coupling the transmission to the main engine shaft and coupling an output shaft from the transmission to the motor/generator.

In an embodiment according to any of the above embodiments, an intershaft bearing is assembled within a radial space between the output shaft and the main engine shaft.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example turbofan engine according to the present invention.
Figure 2 is a schematic view of bearing locations for an example turbofan engine according to the present invention.
Figure 3 is a schematic view of an embodiment of an aft portion of an example turbofan engine which includes a motor/generator within a bearing compartment.
Figure 4 is a schematic view of the example bearing compartment of Figure 3 along an engine axis.
Figure 5 is a cross-sectional view of an example supply conduit embodiment according to the present invention.
Figure 6 is a cross-sectional view of another example supply conduit embodiment according to the present invention.
Figure 7 is a cross-sectional view of yet another example supply conduit embodiment according to the present invention.
Figure 8 is a schematic view illustrating assembly and disassembly of the example motor/generator and bearing compartment according to the present invention.

### DETAILED DESCRIPTION

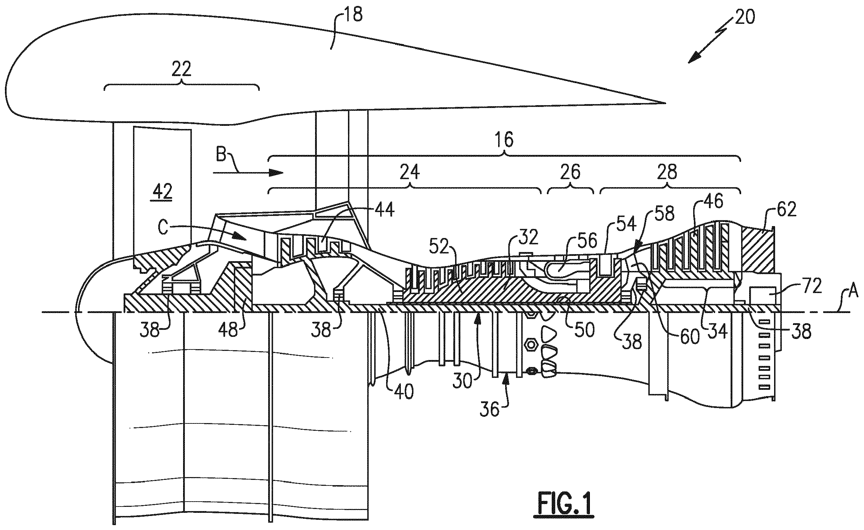

Figure 1 schematically illustrates a gas turbine engine 20. The gas turbine engine 20 is disclosed herein as a two-spool turbofan that generally incorporates a fan section 22 and a core engine section 16. The example core engine section 16 includes, a compressor section 24, a combustor section 26 and a turbine section 28. The fan section 22 drives bypass flow along a bypass flow path B in a bypass duct defined within a nacelle 18, and also drives air along a core flow path C for compression and communication into the combustor section 26 then expansion through the turbine section 28. A motor/generator 72 is supported within a turbine exhaust case 62 for extracting or adding power from a shaft of the engine 20. Although a motor/generator is disclosed in the example embodiment, an electric machine such as a generator or electric motor may also be utilized and is within the contemplation and scope of this disclosure.

Although depicted as a two-spool turbofan gas turbine engine in the disclosed non-limiting embodiment, it should be understood that the concepts described herein are not limited to use with two-spool turbofans as the teachings may be applied to other types of turbine engines including but not limited to three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that the various bearing systems 38 may be provided at different locations and be varied as appropriate to the application.

The low speed spool 30 generally includes a low spool shaft referred to as an inner shaft or main engine shaft 40 that interconnects, a first (or low) pressure compressor 44 and a first (or low) pressure turbine 46. The inner shaft or main engine shaft 40 is connected to a fan section 22 through a speed change mechanism, which in exemplary gas turbine engine 20 is illustrated as a geared architecture 48 to drive fan blades 42 at a lower speed than the low speed spool 30. The high speed spool 32 includes a high spool shaft referred to as an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft or main engine shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor 44 and the fan blades 42 may be positioned forward or aft of the location of the geared architecture 48 or even aft of turbine section 28.

The engine 20 in one example is a high-bypass geared aircraft engine. In a further example, the engine 20 bypass ratio is greater than about six 6:1, with an example embodiment being greater than about ten 10:1, the geared architecture 48 is an epicyclic gear train, such as a planetary gear system or other gear system, with a gear reduction ratio of greater than about 2.3:1 and the low pressure turbine 46 has a pressure ratio that is greater than about 5:1. In one disclosed embodiment, the engine 20 bypass ratio is greater than about ten 10:1, the fan diameter is significantly larger than that of the low pressure compressor 44, and the low pressure turbine 46 has a pressure ratio that is greater than about 5:1. The low pressure turbine 46 pressure ratio is pressure measured prior to the inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including but not limited to direct drive turbofans.

A significant amount of thrust is provided by the bypass flow through the bypass flow path B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45:1. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

The example gas turbine engine includes the fan section 22 that comprises in one non-limiting embodiment less than about 26 fan blades 42. In another non-limiting embodiment, the fan section 22 includes less than about 20 fan blades 42. Moreover, in one disclosed embodiment the low pressure turbine 46 includes no more than about 6 turbine rotors schematically indicated at 34. In another non-limiting example embodiment, the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

An aft bearing assembly 38 is supported by the turbine exhaust case 62 also termed engine case 62 for supporting rotation of an aft portion of the inner shaft 40 of the low speed spool 30. The turbine exhaust case 62 defines an aft most portion of the core flow path C. The high energy exhaust gases exhausted from the turbine section 28 flow expose the turbine exhaust case 62 to relative high temperatures. In this disclosed example, the turbine exhaust case 62 is a separate case attached to other engine static case structures 38. However, it is within the contemplation of this disclosure that the turbine exhaust case 62 may be combined with other static structures of the engine 20.

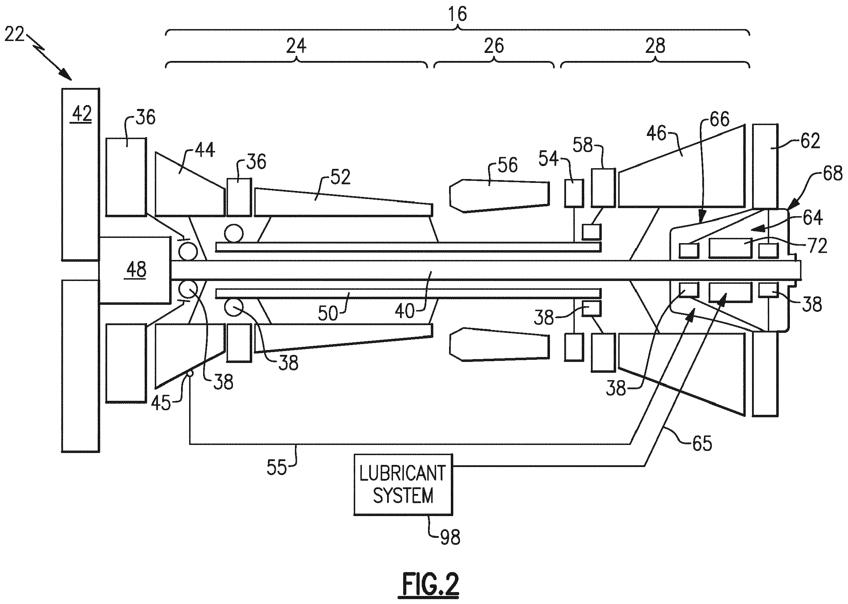

Referring to Figure 2 with continued reference to Figure 1, the bearing assemblies 38 disposed at the aft portion of the engine are exposed to the high temperatures the turbine exhaust case 62 may and is exposed to the high temperatures generated by the high energy gas flow. The bearing assemblies 38 are not compatible with the high temperatures of the exhaust gas flow. The bearing assemblies 38 are enclosed within a bearing compartment 64 and supplied with a lubricant flow 65 from a lubrication system 98. The lubricant flow 65 both lubricates the bearing assemblies 38 and cools the bearing assemblies to maintain a desired operational temperature. Moreover, the bearing compartment 64 may also be cooled with a cooling airflow 55 drawn from upstream locations in the engine 20.

Electric power for the engine 20 is provided by motor/generators driven by a main engine shaft. In this disclosed example engine 20, the motor/generator is a motor/generator 72 and is mounted within the bearing compartment 64 and driven by the inner shaft 40. In this example, the motor/generator 72 produces and communicates electric power for engine operation. It should be understood that although a motor/generator 72 is shown and described by way of example and that any electric machine such as a generator or an electric motor could be utilized and is within the contemplation and scope of this disclosure.

The lubricant flow 65 to the bearing compartment 64 is supplied to the motor/generator 72 to maintain temperatures within a desired operating range. The aft location of the engine 20 encounters extreme temperatures due to exposure to the high energy exhaust gas flow. The location of the motor/generator 72 within the bearing compartment 64 utilizes the cooling lubricant flow 65 already supplied to the bearings for cooling.

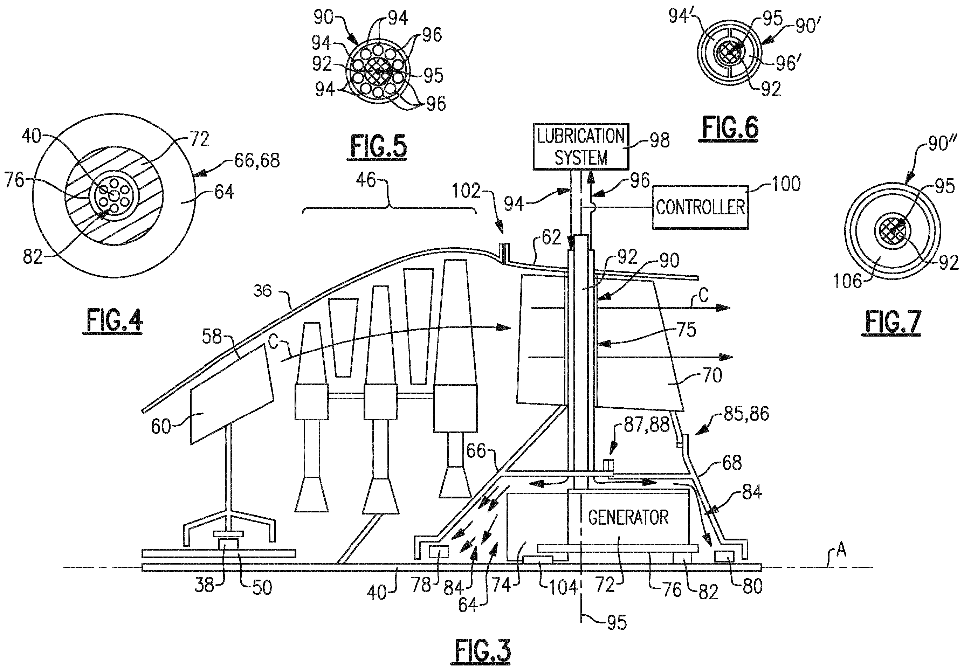

Referring to Figure 3 with continued reference to Figure 2, the aft portion of the engine 20 is schematically shown and includes the motor/generator 72 mounted within the bearing compartment 64. A forward bearing assembly 78 and an aft bearing assembly 80 are provided in the bearing compartment 64 for supporting rotation of the inner shaft 40. In the disclosed example, the forward bearing assembly 78 is spaced axially apart from the aft bearing assembly 80. The motor/generator 72 is disposed within the axial space between the forward and aft bearing assemblies 78, 80.

The motor/generator 72 is exposed to lubricant flow 84 that is provided to lubricate the bearing assemblies 78 and 80. The exposure of the motor/generator 72 to the lubricant flow both lubricates and thermally protects the motor/generator 72. In this example, the motor/generator 72 is driven by an output shaft 76 driven by a transmission 74. The transmission 74 is coupled to the inner shaft 40 through a mechanical link 104. The transmission 74 may be a gear system arranged to drive the motor/generator 72 at a predefined proportion of a speed of the inner shaft 40. The mechanical link 104 may be a gear interface and/or a splined coupling to the inner shaft 40.

The output shaft 76 is concentric about the engine axis A and the inner shaft 40. An intershaft bearing 82 is provided within the radial space between the inner shaft 40 and the output shaft 76. The intershaft bearing 82 enables relative rotation of the output shaft 76 relative to the inner shaft 40. Moreover, the intershaft bearing 82 does not require additional support structure and receives lubricant from the lubricant flow 84 provided to the bearing compartment 64.

Referring to Figure 4 with continued reference to Figure 3, the motor/generator 72 and output shaft 76 are disposed about the engine longitudinal axis A and are concentric with the inner shaft 40. The bearing compartment 64 is disposed about the axis A and defined by a forward housing 66 and an aft housing 68.

The forward housing 66 is a portion of the exhaust case 62 and includes a passage 70 for the core exhaust gas flow C. The passage 70 is an annular duct disposed about the axis A and the bearing compartment 64. The aft housing 68 is attached to the forward housing 66 by attachment of flanges 87 and 88 to for a forward connection and attachment of flanges 85, 86 to form an aft connection. The separation of the aft housing 68 enables assembly and removal of the motor/generator 72 from an aft position of the engine 20.

Lubricant and electric power is routed to and from the bearing compartment 64 through a supply conduit 90. The supply conduit 90 includes inlet lubricant passages 94 and return lubricant passages 96. The inlet and outlet lubricant passages 94, 96 are in communication with and conveys lubricant from and to a lubrication system indicated schematically at 98. The supply conduit 90 extends radially outward from the bearing compartment 64 through a strut 75 disposed within the passage 70. The supply conduit 90 is therefore exposed to the high temperature exhaust gas flow.

An electric power cable 92 extends through the supply conduit within the strut 75. The electric power cable 92 provides electrical communication between the motor/generator 72 and a controller 100. The electric power cable 92 includes electrical connections to communicate control signals to the motor/generator 72 along with suppling and extracting power to or from the motor/generator 72.

Referring to Figure 5 with continued reference to Figure 3, the electric power cable 92 is thermally protected from the high temperatures within the strut 75 by lubricant within the inlet and outlet passages 94, 96 within the supply conduit 90. The electric power cable 92 is surrounded by the inlet and outlet passages 94, 96 that are full of lubricant. The filled inlet and outlet passages 94, 96 thermally isolate the electric power cable 92. In one disclosed example embodiment shown in Figure 5, the inlet and outlet passages 94, 96 comprise a plurality of separate passages that surround the electric power cable 92. Lubricant is maintained within the passages 94, 96 during all engine operation and for a duration of time after engine operation to thermally isolate the electric power cable 92.

In the illustrated example, the electric power cable 92 is disposed along a centerline 95 of the supply conduit 90 and the inlet and outlet passages 94, 96 are grouped separately about the circumference of the electric power cable 92. The inlet and outlet passages 94, 96 may be separately grouped as shown or alternated about the circumference of the electric power cable 92.

Referring to Figure 6, another example supply conduit embodiment is shown and indicated at 90'. The supply conduit 90' includes a single inlet passage 94' and a single outlet passage 96' that surround the electrical power cable 92. The inlet passage '94 and outlet passage 96' define arcuate sectors within a radial space between the central electric power cable 92 and the supply conduit 90'. It should be appreciated that although example embodiments are disclosed by way of example, other inlet and outlet configurations and arrangements that provide thermal isolation of the electric power cable are within the contemplation and scope of this disclosure.

Referring to Figure 7, another example supply conduit embodiment is shown and indicated at 90". The supply conduit 90" includes a single lubricant passage 106. The single lubricant passage 106 is a full annulus around the electrical power cable 92. The lubricant passage 106 may provide for either inlet or outlet of lubricant to or from the bearing compartment 64.

Referring to Figure 3, with reference to Figures 5, 6 and 7, although a single supply conduit 90 is shown by way of example, multiple supply conduits 90 of different configurations may be placed at different circumferential locations about the engine axis. Accordingly, one supply conduit 90 may supply lubricant to the bearing compartment 64, while another may operate as an outlet for lubricant from the bearing compartment 64. Moreover, a separate electrical power cable 92 could be routed through as many of the multiple conduits 90 as needed to communicate both control and power to and from the motor/generator 72.

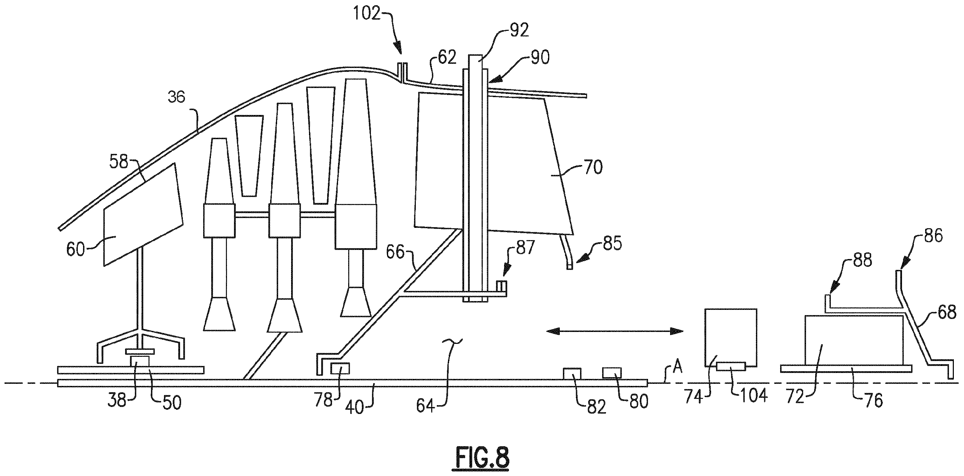

Referring to Figure 8, with continued reference to Figure 3, the example bearing compartment 64 is defined by the forward housing 66 and the aft housing 68. The aft housing 68 may be a separate part or integrated as part of a housing of the motor/generator 72. In one disclosed example embodiment, the aft housing 68 is also a part of a housing of the motor/generator 72. Integrating the aft housing 68 with the motor/generator 72 reduces the number of components and simplifies assembly and disassembly for maintenance purposes.

A disclosed method of assembling a part of the turbofan engine 20 includes assembling the turbine exhaust case 62 to the engine. In this disclosed example, the turbine exhaust case 62 is attached to another engine case or static structure 36 at a flange 102. The example flange 102 is provided aft of the low pressure turbine section 46. The exhaust case 62 includes the forward housing 66 of the bearing compartment 64. The bearing assemblies 78 and 80 are assembled into the bearing compartment 64 for supporting the inner shaft 40. The intershaft bearing 82 may also be assembled into the bearing compartment 64. The bearing assemblies 78, 80 and 82 may all be assembled through the open aft side of the bearing compartment 64 before the aft housing 68 is attached.

The motor/generator 72 and transmission 74 are inserted into the bearing compartment beginning at a position aft of the exhaust case 62 and moved forward along the axis A into the bearing compartment 64. In this example, assembly of the motor/generator 72 into the bearing compartment 64 also places the aft housing 68 into mating contact with the forward housing 66. The mating contact is provided between the flanges 87, 88 at the forward attachment location and the flanges 85 and 86 at the aft attachment location. A plurality of threaded fasteners (not shown) are utilized to secure the flanges 87, 88, 85 and 86 about a circumference of the each housing to enclose the bearing compartment 64.

Assembly of the transmission 74 includes coupling through the mechanical link 104 to the inner shaft 40. The transmission 74 is coupled to the output shaft 76 that is in turn coupled to the motor/generator 72. The output shaft 76 is supported on the inner shaft 40 by the intershaft bearing 82.

The assembly is continued with assembly of the supply conduit 90 to extend radially outward through the turbine case 62. The lubricant passages 94, 96 and electric power cable 92 are assembled into the supply conduit 90 to surround the electric power cable 92. Once the assembly is completed, the lubricant passages 94, 96 are attached to the lubrication system 98 and the electric power cable 92 coupled to the controller 100.

Accordingly, the example engine 20 includes the motor/generator 72 positioned within a bearing compartment within a turbine exhaust case 62 and thermally protected by sharing lubricant flow provided to the bearing assemblies.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A turbofan engine (20) comprising:
a main engine shaft (40) rotatable about an engine axis A;
a bearing assembly (78, 80) supporting rotation of the main engine shaft (40);
a bearing compartment (64) defining an enclosed space around the bearing assembly (78, 80); and
an electric machine (72) supported within the bearing compartment (64) and coupled to the main engine shaft (40), and, optionally, the main engine shaft (40) comprises a shaft coupled to an aft most turbine section (28).

2. The turbofan engine (20) as recited in claim 1, wherein the bearing assembly (78, 80) comprises a forward bearing (78) spaced axially apart from an aft bearing (80).

3. The turbofan engine (20) as recited in claim 1 or 2, wherein the bearing compartment (64) is disposed within a turbine exhaust case (62).

4. A turbofan engine (20) assembly comprising:
a fan (22) rotatable about a main engine axis (A);
a low spool shaft (40) rotatable about the main engine axis (A) and coupling a low pressure compressor (44) to a low pressure turbine (46);
a high spool shaft (50) concentric about the low spool shaft (40) and rotatable about the main engine axis (A), the high spool shaft (50) coupling a high pressure compressor (52) to a high pressure turbine (54);
a combustor (56) disposed axially between the high pressure compressor (52) and the high pressure turbine (54);
an aft bearing compartment (64) disposed within an engine case (62) aft of the low pressure turbine (46);
an aft bearing assembly (78, 80) disposed within the aft bearing compartment (64), the aft bearing assembly (78, 80) supporting an aft end of the low spool shaft (40); and
a motor/generator (72) disposed within the aft bearing compartment (64) and coupled to the low spool shaft (40).

5. The turbofan engine (20) as recited in claim 3 or 4, including a supply conduit (90) that extends at least partially through the turbine exhaust/engine case (62) and includes a lubricant passage (94) communicating lubricant (84) to the bearing assembly (78, 80) and motor/generator electric machine (72) within the bearing compartment (64), and, optionally, the lubricant passage (94, 96) comprises at least lubricant supply passage (94) and a lubricant return passage (96).

6. The turbofan engine (20) as recited in claim 5, wherein an electric power cable (92) is routed through the supply conduit (90) and at least partially surrounded by the lubricant passage (94).

7. The turbofan engine (20) as recited in claim 6, wherein the electric power cable (92) is disposed along a centerline of the supply conduit (90) and the lubricant passage (94) is disposed at least partially around the electric power cable (92).

8. The turbofan engine (20) as recited in any of claims 1 to 7, including a transmission (74) coupled between the main engine shaft (40) and the electric machine (72).

9. The turbofan engine (20) as recited in claim 8, wherein the transmission (74) drives an output shaft (76) that is concentric with the main engine shaft (40) and coupled to the electric machine (72).

10. The turbofan engine (20) as recited in claim 9, including an intershaft bearing (82) disposed between the output shaft (76) and the main engine shaft (40).

11. A method of assembling a turbofan engine (20) comprising:
assembling a first housing portion (66) within a turbine exhaust case (62) to define a forward portion of a bearing compartment (64);
assembling a bearing assembly (78, 80) within the bearing compartment (64) for supporting a main engine shaft (40);
assembling an motor/generator (72) into the first housing portion (66) beginning aft of the turbine exhaust case (62) and moving forward along an axis A of the main engine shaft (40); and
attaching a second housing portion (68) to the first housing portion (66) to define an aft portion of the bearing compartment (64) and enclose the bearing assembly (78) and motor/generator (72).

12. The method as recited in claim 11, including assembling a supply conduit (90) to extend radially outward through the turbine exhaust case (62) to provide a protected passage for an electric power cable (92) coupled to the motor/generator (72).

13. The method as recited in claim 12, including assembling the supply conduit (90) to include a lubricant passage (94, 96, 106) surrounding the electric power cable (92).

14. The method as recited in any of claims 11 to 13, including assembling a transmission (74) into the bearing compartment (64) and coupling the transmission (74) to the main engine shaft (40) and coupling an output shaft (76) from the transmission (74) to the motor/generator (72).

15. The method as recited in claim 14, including assembling an intershaft bearing (82) within a radial space between the output shaft (76) and the main engine shaft (40).
